# EUROPÄISCHE PATENTSCHRIFT

(11) **EP 2 545 253 B1**
(45) Veröffentlichungstag und Bekanntmachung des Hinweises auf die Patenterteilung: **11.05.2016**
(21) Anmeldenummer: 11726045.5
(22) Anmeldetag: 09.03.2011
(51) Int. Cl.: B23Q 3/08, F01D 25/28, B23Q 3/06, F01D 5/28

(54) **Spannvorrichtung und Verfahren zum Aufspannen eines Bauteils mittels eines Klebemittels auf einem Bauteilträger**
Mounting device and method for mounting a component on a component carrier by use of an adhesive
Dispositif de serrage et procédé de serrage d'une pièce sur un porte-pièce au travers d'un joint adhésif

(30) Priorität: 11.03.2010 DE 102010010942
(43) Veröffentlichungstag der Anmeldung: 16.01.2013
(73) Patentinhaber: MTU Aero Engines AG, 80995 München (DE)
(72) Erfinder: FESSLER-KNOBEL, Martin, 80639 München (DE); HUTTNER, Roland, 82287 Jesenwang (DE)
(86) Internationale Anmeldenummer: PCT/DE2011/000243
(87) Internationale Veröffentlichungsnummer: WO 2011/110167

(56) Entgegenhaltungen:
- DE-A1-102008 012 299
- DE-A1-102009 013 726
- DE-A1-102009 032 703
- US-A1- 2007 221 328

## Beschreibung

Die Erfindung betrifft eine Spannvorrichtung zum Aufspannen eines Bauteils auf einem Bauteilträger nach dem Oberbegriff des Patentanspruchs 1 und ein Verfahren zum Aufspannen eines Bauteils in einer derartigen Spannvorrichtung nach dem Oberbegriff des Anspruchs 8, wie aus der Druckschrift US 2007/0221328 A1 bekannt.

Bauteile durchlaufen häufig bis zur Erreichung ihrer Endform eine Vielzahl von Bearbeitungsstationen. Die Positionierung der Bauteile in den Bearbeitungsstationen erfolgt dabei meist über Bauteilträger, an denen die Bauteile in einer Spannvorrichtung zuvor fixiert werden.

Die deutsche Patentanmeldung DE 10 2007 020 957 A1 der Anmelderin zeigt beispielsweise eine Spannvorrichtung zum Aufspannen einer Turbinenschaufel mittels einer Klebeverbindung auf einem Bauteilträger. Der Bauteilträger hat eine zum Schaufelblatt konturnah ausgebildete Aufspannfläche, auf die ein strahlungsaushärtbares Klebemittel großflächig aufgetragen wird.

Diese bekannte Lösung ermöglicht eine sehr sichere Fixierung der Turbinenschaufel, jedoch erlaubt die konturnahe Ausbildung der Aufspannfläche die Anwendung des Bauteilträgers nur bei Bauteilen mit einer ähnlichen Schaufelblattgeometrie. Ferner kann beim Lösen der Turbinenschaufel von dem Bauteilträger eine versehentliche Beschädigung des Schaufelblattes erfolgen, da diese großflächig mit der Aufspannfläche verklebt ist.

Zum Ausgleich von Geometrieabweichungen zwischen einer Aufspannfläche eines Bauteilträgers und einer Bauteilfläche finden daher häufig Distanzelemente wie Leisten oder Quader Anwendung, die zwischen dem Bauteilträger und dem Bauteil positioniert und mit verklebt werden. Diese Distanzelemente sind jedoch bei bestimmten Bauteilgeometrien wie beispielsweise sphärisch geformten Bauteilflächen schwierig zu positionieren. Ferner lässt sich durch die Distanzelemente kein optimaler Klebespalt einstellen.

Die Aufgabe der vorliegenden Erfindung besteht darin, eine Spannvorrichtung und ein Verfahren zum Aufspannen eines Bauteils auf einem Bauteilträger mittels eines Klebemittels zu schaffen, die die vorgenannten Nachteile beseitigen, eine universelle Anwendbarkeit bei einer Vielzahl von Bauteilformen ermöglichen, insbesondere eine optimale Einstellung eines Klebespaltes, und ein einfaches Lösen des aufgespannten Bauteils erlauben.

Diese Aufgabe wird gelöst durch eine Spannvorrichtung mit den Merkmalen des Patentanspruchs 1 und durch ein Verfahren mit den Merkmalen des Patentanspruchs 8.

Eine erfindungsgemäße Spannvorrichtung zum Aufspannen eines Bauteils auf einen Bauteilträger mittels eines Klebemittels, beispielsweise ein strahlungsaushärtbares Klebemittel oder ein Klebemittel auf 2-Komponentenbasis, hat eine Vielzahl von Adapter zur Positionierung des Bauteils zum Bauteüträger, die jeweils in einer Führung des Bauteilträgers geführt sind und jeweils eine Klebefläche zur Herstellung einer Klebeverbindung mit dem Bauteil aufweisen. Dabei ist das Klebemittel über ein internes Kanalsystem der in die Führungen eingesetzten Adapter (16, 18, 42) verteilbar. Die geführten Adapter erlauben den Ausgleich von Geometrieabweichungen zwischen einer Aufspannfläche des Bauteilträgers und einer gegenüberliegenden Bauteilfläche, so dass stets ein lokal optimaler Klebespalt eingestellt werden kann. Die Aufspannfläche muss nicht mehr konturnah zur gegenüberliegenden Bauteilfläche ausgebildet sein, was die Verwendung der Spannvorrichtung bei einer Vielzahl von Bauteilen mit unterschiedlicher Geometrie erlaubt. Dabei wird durch die Führung der Adapter in dem Bauteilträger ein versehentliches Verschieben bzw. Verrutschen der Adapter aus ihrer eingestellten Position verhindert. Die Adapter dienen quasi als einzeln ansteuerbare verfahrbare Stempel bzw. Stützen, die in ortsfesten Führungen gelagert sind. Vorteilhafterweise sind die Adapter einheitlich ausgeführt, so dass sie nicht nur einer bestimmen Bohrung zugeordnet sind. Ferner können einheitlich ausgebildete Adapter zur Fixierung unterschiedlich konturierter Bauteile verwendet werden.

Die Führungen sind vorzugsweise als Durchgangsbohrungen ausgebildet, die sich durch den Bauteilträger hindurch von einer vorderen Aufspannfläche zu einer rückwärtigen Trägerfläche erstrecken. Dies vereinfacht insbesondere das Einsetzen bzw. die Positionierung der Adapter. Dabei sind die Adapter stufenlos in den Führungen versetzbar, so dass quasi unabhängig von dem Verlauf der Aufspannfläche Bauteile mit unterschiedlichster Geometrie aufgespannt werden können. Gleichzeitig erlaubt dieses Ausführungsbeispiel aber auch die Verwendung bei Bauteilen mit einer zur Aufspannfläche konturnahen Bauteilfläche, da die Adapter derart in den Führungen positioniert werden können, dass sie bündig mit dieser abschließen.

Die Adapter können einen zylindrischen Außenumfang haben und dabei beispielsweise einen becherartigen Querschnitt aufweisen. Sie haben vorzugsweise einen Außendurchmesser, der kleiner ist als sein Innendurchmesser der Führungen bzw. Bohrungen, so dass zwischen den Adaptern und Bohrungswandungen ein sichelförmiger bzw. Ringspalt gebildet wird, der die Aufnahme überschüssigen Klebemittels erlaubt und somit eine umfangseitige Verklebung der Adapter mit dem Bauteilträger ermöglicht.

Die Adapter können jedoch auch jeweils ein zylindrischer Körper sein, der dichtend in Anlage mit der Bauteilfläche bringbar ist. Zur Zuführung des Klebemittels zur Klebefläche und zur jeweiligen Bohrungswand weisen diese Adapter ein entsprechend ausgebildetes internes Kanalsystem auf. Derartige Adapter können einfach als Kunststoff-Spritzteile hergestellt werden.

Das Lösen des Bauteils von dem Bauteilträger bzw. das Auswerfen der Adapter lässt sich bauteilschonend durchführen, wenn zumindest ein Auswurfelement vorgesehen ist, das gegen eine rückwärtige Stirnfläche der Adapter drückbar ist. Dabei lässt sich das Auswerfen mit reduzierter Kraft durchführen, wenn wie bei einem Ausführungsbeispiel in dem Auswurfelement ein Heizelement integriert ist, mittels dem der ausgehärtete Klebstoff vor dem Auswerfen schwächbar ist. Das Heizelement kann beispielsweise Mikrowellen, oder UV-Strahlung emittieren oder ein entsprechendes Magnetfeld aufbauen. Ferner kann die zum Lösen erforderliche Strahlung mittels einer externen Strahlungsquelle, bspw. mittels UV-Strahlen oder Mikrowellensender, in den Klebespalt eingebracht werden.

Das Lösen des Bauteils von dem Bauteilträger bzw. das Auswerfen der Adapter lässt sich wesentlich vereinfachen, wenn die Adapter als Einwegelemente ausgebildet sind, die beim Auswerfen zerstörbar sind. Insbesondere entfällt dabei eine Reinigung der Adapter. Die Adapter können jedoch auch als wiederverwendbare Mehrwegelemente ausgeführt sein und werden entsprechend beim Lösen nicht zerstört.

Bei einem erfindungsgemäßen Verfahren zum Aufspannen eines Bauteils auf einem Bauteilträger mittels eines Klebemittels, beispielsweise ein strahlungsaushärtbares Klebemittel oder ein Klebemittel auf 2-Komponentenbasis, wird zuerst das Bauteil zum Bauteilträger positioniert. Dann wird ein lokaler Klebespalt zwischen jeweils einem in einer Führung des Bauteilträgers geführten Adapter und dem Bauteil eingestellt. Danach wird das Klebemittel zur Herstellung einer Klebeverbindung ausgehärtet. Das Klebemittel wird über ein internes Kanalsystem der in die Führung eingesetzten Adapter verteilt, was eine besonders gezielte und dosierte Anwendung des Klebemittels erlaubt. Dabei wird der jeweilige Adapter vorzugsweise bis zur Bauteilfläche in die Bohrung eingesetzt und dichtet dort gegen ein Verlaufen des Klebemittels ab. Der Adapter stützt sich seitlich an der Bohrungswand ab und die Klebemittelzufuhr wird aufgesteuert, bis über das Kanalsystem ausreichend Klebemittel an den vorbestimmten Bereichen zwischen dem jeweiligen Adapter und dem Bauteilträger sowie dem Adapter und dem Bauteil angeordnet ist. Dabei kann die Klebemittelzufuhr kontinuierlich oder diskontinuierlich, beispielsweise tröpfchenweise, erfolgen. Nach dem Aushärten des Klebemittels ist das Bauteil fest mit dem Bauteilträger verbunden und kann entsprechend bearbeitet werden. Dieses Verfahren erlaubt die präzise, sichere und schnelle Fixierung des Bauteils zum Bauteilträger, da mittels den Adaptern Geometrieunterschiede zwischen einer Aufspannfläche des Bauteilträgers und einer gegenüberliegenden Bauteilfläche ausgeglichen werden können, so dass das Bauteil trotz fehlender Konturnähe der Aufspannfläche zur Bauteilfläche bzw. umgekehrt über eine Vielzahl von optimalen Klebespalten zum bzw. am Bauteilträger fixiert werden kann.

Bei einem Ausführungsbeispiel wird das Klebemittel vor einem Einsetzen der Adapter in die Führungen in dieselben eingefüllt. Beim Einsetzen der jeweiligen Adapter wird dann das Klebemittel an die entsprechenden Klebebereiche zwischen den Adaptern und dem Bauteil sowie zwischen den Adaptern und dem Bauteilträger verteilt. Bei einem anderen Ausführungsbeispiel wird das Klebemittel vor dem Einsetzen der Adapter in die Bohrungen stirnseitig auf die Adapter aufgetragen. Das Einsetzen der Adapter kann vollautomatisiert, teilautomatisiert oder manuell erfolgen.

Bevorzugterweise wird das Bauteil über ein Ausbrechen der Adapter mittels eines Auswurfelementes gelöst, das jeweils an einer rückwärtigen Stirnfläche der Adapter angreift. Zur Reduzierung der Auswurfkraft kann bei einem Ausführungsbeispiel das Klebemittel über ein vorzugsweise integrales Heizelement des Auswurfelements geschwächt werden. Dabei können gemäß einem Ausführungsbeispiel die Adapter beim Auswerfen zerstört werden, so dass entsprechende Reinigungsmaßnahmen zur Wiederverwendung der Adapter entfallen. Das Auswerfen kann vollautomatisiert, teilautomatisiert oder manuell erfolgen.

Sonstige vorteilhafte Ausführungsbeispiele der vorliegenden Erfindung sind Gegenstand weiterer Unteransprüche.

Im Folgenden werden bevorzugte Ausführungsbeispiele der vorliegenden Erfindung näher erläutert. Es zeigen:
Figur 1 einen Querschnitt durch einen erfindungsgemäßen Bauteilträger, auf dem ein Bauteil aufgespannt ist,
Figuren 2 bis 5 Verfahrensschritte zum Aufspannen und Lösen eines Bauteils auf bzw. von dem Bauteilträger gemäß einem ersten erfindungsgemäßen Ausführungsbeispiel,
Figur 6 einen Verfahrensschritt zum Einsetzen eines Adapters gemäß einem zweiten erfindungsgemäßen Ausführungsbeispiel, und
Figur 7 einen Verfahrensschritt zum Lösen eines Bauteils von dem Bauteilträger gemäß einem zweiten erfindungsgemäßen Ausführungsbeispiel.

In den Figuren tragen gleiche konstruktive Elemente die gleichen Bezugsziffern, wobei bei mehreren gleichen konstruktiven Elementen in einer Figur aus Gründen der Übersichtlichkeit lediglich einige der Elemente mit einer Bezugsziffer versehen sind.

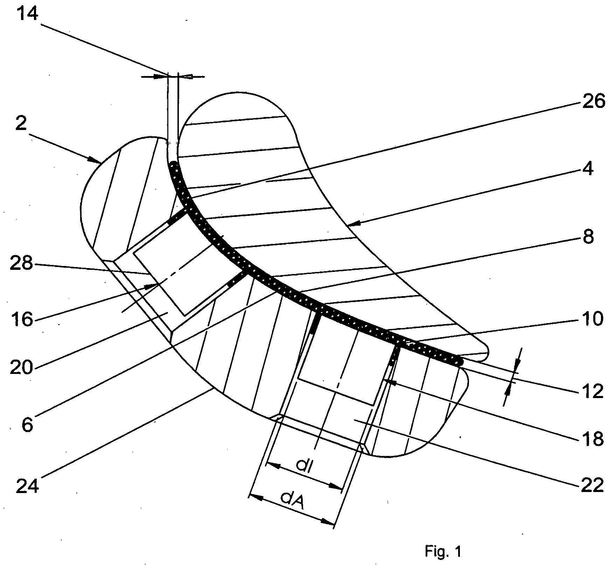

Figur 1 zeigt einen Querschnitt durch einen erfindungsgemäßen Bauteilträger 2 einer nicht näher gezeigten Spannvorrichtung, auf dem ein Bauteil 4, beispielsweise eine Turbinen- oder Verdichterschaufel, aufgespannt ist. Der Bauteilträger 2 hat eine konkave Aufspannfläche 6, die verhältnismäßig konturnah zu einer gegenüberliegenden konvexen Bauteilfläche 8 ausgebildet ist. Das Bauteil 4 ist über ein abschnittsweise aufgebrachtes strahlungsaushärtbares Klebemittel 10 an dem Bauteilträger 2 gesichert, wodurch eine Vielzahl von zueinander beabstandeten einzelnen Klebeverbindungen mit jeweils einem Klebespalt 12, 14 mit einer optimalen Spaltbreite geschaffen wird.

Das Klebemittel 10 ist im Bereich von Adaptern 16, 18 angeordnet, die jeweils in einer Bohrung 20, 22 des Bauteilträgers 2 geführt sind. Die Bohrungen 20, 22 verlaufen radial zur Aufspannfläche 6 und erstrecken sich durch den Bauteilträger 2 hindurch zwischen der Aufspannfläche 6 und einer rückwärtigen Trägerfläche 24.

Die Adapter 16, 18 bestehen bevorzugterweise aus einem zerbrechbaren, gegebenenfalls strahlungsdurchlässigen, Material wie Glas bzw. Quarzglas oder einem entsprechend spröden Kunststoffmaterial und haben eine zylindrische Gestalt. Sie haben eine der Bauteilfläche 8 zugewandte Klebefläche 26, die vorzugsweise eben ausgebildet ist, und eine rückwärtige Stirnfläche 28 sowie einem Außendurchmesser dA, der kleiner als ein Innendurchmesser dl der Bohrungen 20, 22 ist. Die Adapter 16, 18 sind somit das Bindeglied zwischen dem Bauteilträger 2 und dem Bauteil 4.

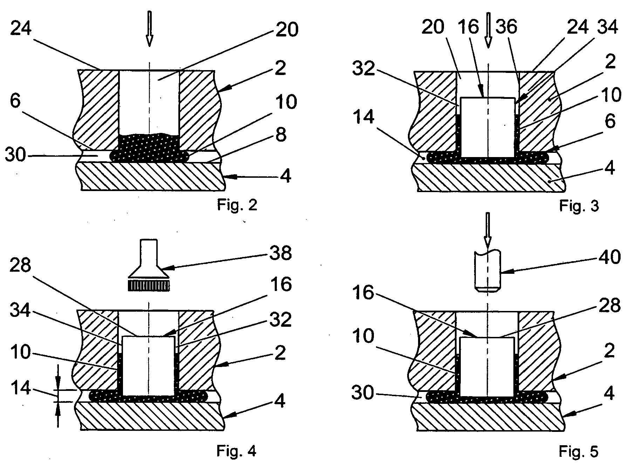

Im Folgenden wird ein erfindungsgemäßes Verfahren zur Positionierung und zum Lösen des Bauteils 4 an bzw. von dem Bauteilträger 2 erläutert, wobei stellvertretend für sämtliche Adapter 16, 18 sowie für sämtliche Bohrungen bzw. Führungen 20, 22 das Verfahren anhand des Adapters 16 und der Bohrung 20 erläutert wird:
Gemäß Figur 2 wird zuerst das Bauteil 4 derart zum Bauteilträger 2 positioniert, dass es mit seiner Bauteilfläche 8 zur Ausbildung eines Klebespaltes von der Aufspannfläche 6 beabstandet ist. Dann wird das Klebemittel 10 in Pfeilrichtung von der rückwärtigen Trägerfläche 24 aus in die Bohrung 20 eingefüllt, wobei die Viskosität des Klebemittels 10 ein Weglaufen desselben aus der Bohrung 20 in einen Zwischenraum 30 zwischen der Aufspannfläche 6 und der Bauteilfläche 8 verhindert. Das Klebemittel 10 fließt lediglich im Randbereich der Bohrung 20 in den Zwischenraum 30 ab. Damit das Klebemittel 10 definiert verteilt wird, kann auch eine poröse und flexible Fließhilfe, ein sogenanntes Pad, eingesetzt werden.

Dann wird gemäß Figur 3 der Adapter 16 in die Bohrung 20 in Pfeilrichtung von der rückwärtigen Trägerfläche 24 aus eingesetzt, bis es derart mit einem Kopfabschnitt und somit mit seiner Klebefläche 26 über die Aufspannfläche 6 hinausragt, dass ein optimaler Klebespalt 14 zwischen der Klebefläche 26 und dem jeweiligen Abschnitt der Bauteilfläche 8 eingestellt ist. Aufgrund des gegenüber dem Innendurchmesser dl der Bohrung 20 geringeren Außendurchmessers dA bildet sich ein Ringspalt 32 zwischen seiner Außenwandung 34 und der gegenüberliegenden Bohrungswandung 36 aus, in den das überschüssige Klebemittel 14 aus dem Zwischenraum 30 und dem Klebespalt 14 verdrängt wird.

Nach der Einstellung des optimalen Klebespaltes 14 wird das Klebemittel 10 mittels einer gegenüber der rückwärtigen Stirnfläche 28 des Adapters 16 positionierten Strahlungsquelle 38, die elektromagnetische Strahlung emittiert, beispielsweise Licht, ausgehärtet. Dabei wird sowohl das Klebemittel 10 in dem Ringspalt 32 als auch in dem Klebespalt 14 ausgehärtet, so dass der Adapter 16 umfangsseitig über seine Außenwandung 34 mit dem Bauteilträger 2 und stirnseitig über seine Klebefläche 26 mit dem Bauteil 4 verklebt ist. Somit ist das Bauteil 4 im Wesentlichen mittelbar durch den Adapter 16 über die stirnseitige Klebeverbindung im Bereich der Klebefläche 26 und über die umfangsseitige Klebeverbindung im Bereich der Außenwandung 34 an dem Bauteilträger 2 angebunden.

Zum Lösen des Bauteils 4 von dem Bauteilträger 2 wird gemäß Figur 5 ein bolzenartiges Auswurfelement 40 verwendet, das in Pfeilrichtung gegen die rückwärtige Stirnfläche 28 des Adapters16 gedrückt wird. Beim Auswerfen wird der Adapter 16 bevorzugterweise zerstört und dadurch die Klebeverbindung des Adapters 16 zum Bauteilträger 2 sowie zum Bauteil 4 aufgehoben, wobei das sich im Randbereich der Bohrung 20 in dem Zwischenraum 30 angesammelte Klebemittel 10 bzw. das unmittelbar zwischen dem Bauteil 4 und dem Bauteilträger 2 angeordnete Klebemittel 10 eine Beschädigung des Bauteils 4 verhindert. Der Adapter 16 zerfällt in Einzelteile, die einfach von dem Bauteilträger 2 bzw. dem Bauteil 4 entfernt werden können.

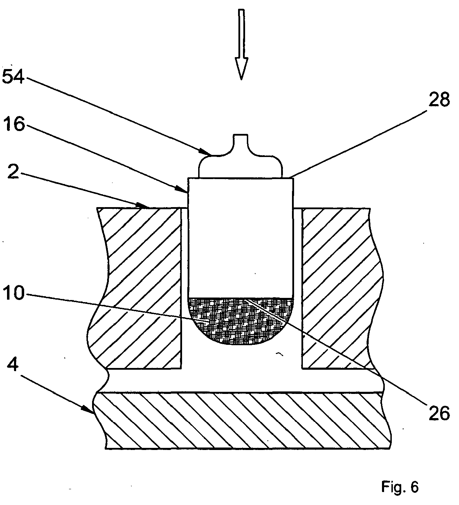

Wie in Figur 6 gezeigt kann der Auftrag des Klebemittels 10 jedoch auch stirnseitig im Bereich der Klebefläche 26 des Adapters 16 erfolgen und dieser dann anschließend beispielsweise über eine an seiner rückwärtigen Stirnfläche 28 angreifenden Saugglocke 54 in die Bohrung 20 eingeführt werden.

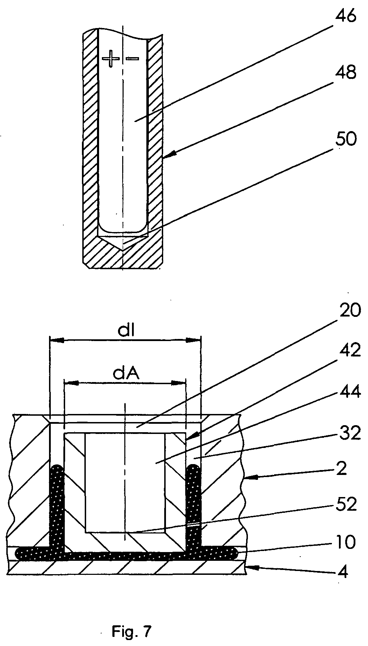

Das Lösen der Klebeverbindungen bzw. das Auswerfen des jeweiligen Adapters 16 kann jedoch auch über eine Erwärmung des Klebemittels 10 mit reduzierter Kraft erfolgen. Eine derartige erfindungsgemäße Lösung ist in Figur 7 gezeigt. Dabei kann insbesondere aufgrund der reduzierten Kraft eine Zerstörung des Adapters 16 bzw. 42 verhindert werden, so dass dieser nach einer entsprechenden Reinigung erneut verwendet werden kann.

Gemäß Figur 7 hat ein derartiger Adapter 42 einen becherartigen Querschnitt mit einem rückwärtig geöffneten Hohlraum 44 zur Aufnahme eines mit einem Heizelement 46 versehenen bolzenartigen Auswurfelementes 48. Das Heizelement 46 ist in einer Sacklochbohrung 50 des Auswurfelementes 48 angeordnet und elektrisch betreibbar. Entsprechend des vorbeschriebenen Adapters 16 weist auch dieser Adapter 42 zur Bildung eines Ring- bzw. sichelartigen Spaltes 32 einen Außendurchmesser dA auf, der kleiner als ein Innendurchmesser dl der Bohrung 20 ist.

Zum Auswerfen des Adapters 42 bzw. zum Lösen des Bauteils 4 von dem Bauteilträger 2 wird das Auswurfelement 48 in Richtung des Adapters 42 verfahren, bis er mit seinem Heizelement 46 zumindest abschnittsweise in den Hohlraum 44 eintaucht. Das Heizelement 46 ist bzw. wird aktiviert und bewirkt somit eine Erwärmung des Klebemittels 10, was zu einer erheblichen Schwächung der umfangseitigen und stirnseitigen Klebeverbindung führt. Sobald das Klebemittel 10 ausreichend erwärmt ist, wird die Vorschubbewegung des Auswurfelementes 48 fortgesetzt, wobei durch das stirnseitige Auflaufen des Auswurfselements 48 auf eine den Hohlraum 44 begrenzende Bodenfläche 52 der Adapter 42 aus der Bohrung 20 ausgeworfen wird, so dass das Bauteil 4 von dem Bauteilträger 2 gelöst ist.

Offenbart ist eine Spannvorrichtung zum Aufspannen eines Bauteils auf einem Bauteilträger mittels eines Klebemittels, wobei eine Vielzahl von in jeweils einer Führung des Bauteilträgers geführten Adaptern zur Positionierung des Bauteils zum Bauteilträger vorgesehen ist, die jeweils eine Klebefläche zur Herstellung einer Klebeverbindung mit dem Bauteil aufweisen, sowie ein Verfahren zum Aufspannen eines Bauteils unter Verwendung einer derartigen Spannvorrichtung.

## Patentansprüche

1. Spannvorrichtung zum Aufspannen eines Bauteils (4) auf einem Bauteilträger (2) mittels eines Klebemittels (10), wobei die Spannvorrichtung eine Vielzahl von in jeweils einer Führung (20, 22) des Bauteilträgers (2) geführten Adaptern (16, 18; 42) zur Fixierung des Bauteils (4) zum Bauteilträger (2), die jeweils eine Klebefläche (26) zur Herstellung einer Klebeverbindung mit dem Bauteil (4) aufweisen,
**dadurch gekennzeichnet, dass**
das Klebemittel (10) über ein internes Kanalsystem der in die Führungen (20, 22) eingesetzten Adapter (16, 18, 42) verteilbar ist.

2. Spannvorrichtung nach Anspruch 1, wobei die Führungen (20, 22) als Durchgangsöffnung, insbesondere Durchgangsbohrung, ausgebildet sind, die sich durch den Bauteilträger (2) von einer vorderen Aufspannfläche (6) zu einer rückwärtigen Trägerfläche (24) erstrecken.

3. Spannvorrichtung nach Anspruch 2, wobei die Adapter (16, 18; 42) zylindrische Körper sind, die jeweils einen Außendurchmesser (dA) haben, der kleiner als ein Innendurchmesser (dl) der Führungen (20, 22) ist.

4. Spannvorrichtung nach Anspruch 3, wobei die Adapter (42) becherartig ausgebildet sind.

5. Spannvorrichtung nach einem der vorhergehenden Ansprüche, wobei zumindest ein verfahrbares Auswurfelement (40; 48) zum Lösen der Klebeverbindungen vorgesehen ist, das gegen eine rückwärtige Stirnfläche (28; 52) der Adaptern (16, 18; 42) drückbar ist.

6. Spannvorrichtung nach Anspruch 5, wobei das Auswurfelement (48) ein Heizelement (46) zur Schwächung des ausgehärteten Klebemittels (10) aufweist.

7. Spannvorrichtung nach einem der vorhergehenden Ansprüche, wobei die Adapter (16, 18; 42) als Einwegelemente ausgebildet sind.

8. Verfahren zum Aufspannen eines Bauteils (4) auf einem Bauteilträger (2) mittels eines Klebemittels (10) unter Verwendung einer Spannvorrichtung nach einem der Ansprüche 1 bis 7, mit den Schritten:
- Positionieren des Bauteils (4) zum Bauteilträger (2),
- Einstellen jeweils eines Klebespaltes (12, 14) zwischen den Adaptern (16, 18; 42) und dem Bauteil (4), und
- Aushärten des Klebemittels (10) zur Herstellung von Klebeverbindungen zwischen den Adaptern (16, 18; 42) und dem Bauteil (4),
**dadurch gekennzeichnet, dass**
das Klebemittel (10) über ein internes Kanalsystem der in die Führungen (20, 22) eingesetzten Adapter (16, 18; 42) verteilt wird.

9. Verfahren nach Anspruch 8, wobei das Klebemittel (10) vor einem Einsetzen der Adapter (16, 18; 42) in die Führungen (20, 22) in dieselben eingefüllt wird.

10. Verfahren nach Anspruch 8, wobei das Klebemittel (10) vor dem Einsetzen der Adapter (16, 18; 42) in die Bohrungen (20, 22) stirnseitig auf die Adapter (16, 18; 42) aufgetragen wird.

11. Verfahren nach einem der Ansprüche 8 bis 10, wobei das Auswerfen der Adapter (16, 18; 42) jeweils mittels eines Auswurfelements (40; 48) erfolgt, das an einer rückwärtigen Stirnfläche (28; 52) der Adapter (16, 18; 42) angreift.

12. Verfahren nach Anspruch 11, wobei vor dem Auswerfen das Klebemittel (10) über ein Heizelement (46) des Auswurfelements (48) geschwächt wird.

13. Verfahren nach Anspruch 11 oder 12, wobei die Adapter (16, 18; 42) beim Auswerfen zerstört werden.

## Claims

1. Clamping device for clamping a component (4) on a component carrier (2) by means of an adhesive (10), wherein the clamping device has a plurality of adapters (16, 18; 42) guided respectively in a guide (20, 22) of the component carrier (2) for fixing the component (4) to the component carrier (2), said adapters (16, 18; 42) each having an adhesive surface (26) for the production of an adhesive bond with the component (4),
**characterised in that**
the adhesive (10) can be distributed via an internal channel system of the adapters (16, 18, 42) inserted into the guides (20, 22).

2. Clamping device according to claim 1, wherein the guides (20,22) are formed as passage openings, in particular through bores, which extend through the component carrier (2) from a front clamping surface (6) to a rear carrier surface (24).

3. Clamping device according to claim 2, wherein the adapters (16, 18; 42) are cylindrical bodies which each have an outer diameter (dA) which is smaller than an inner diameter (dI) of the guides (20, 22).

4. Clamping device according to claim 3, wherein the adapters (42) are formed to be cup-like.

5. Clamping device according to one of the preceding claims, wherein at least one mobile ejection element (40; 48) is provided to loosen the adhesive bonds, said ejection element (40; 48) being able to be pressed against a rear end surface (28; 52) of the adapters (16, 18; 42).

6. Clamping device according to claim 5, wherein the ejection element (48) has a heating element (46) for weakening the hardened adhesive (10).

7. Clamping device according to one of the preceding claims, wherein the adapters (16, 18; 42) are formed as disposable elements.

8. Method for clamping a component (4) on a component carrier (2) by means of an adhesive (10) by using a clamping device according to one of claims 1 to 7, having the steps:
- positioning the component (4) relative to the component carrier (2),
- setting an adhesive gap (12, 14) between the adapters (16, 18; 42) and the component (4) in each case, and
- hardening the adhesive (10) for the production of adhesive bonds between the adapters (16, 18; 42) and the component (4),
**characterised in that**
the adhesive (10) can be distributed via an internal channel system of the adapters (16, 18; 42) introduced into the guides (20, 22).

9. Method according to claim 8, wherein the adhesive (10) is introduced into the guides (20, 22) before an insertion of the adapters (16, 18; 42) into these.

10. Method according to claim 8, wherein the adhesive (10) is applied to the adapters (16, 18; 42) on the end side before the insertion of the adapters (16, 18; 42) into the bores (20,22).

11. Method according to one of claims 8 to 10, wherein the ejection of the adapters (16, 18; 42) takes place in each case by means of an ejection element (40; 48) which engages with a rear end surface (28; 52) of the adapters (16, 18; 42).

12. Method according to claim 11, wherein the adhesive (10) is weakened using a heating element (46) of the ejection element (48) before ejection.

13. Method according to claim 11 or 12, wherein the adapters (16, 18; 42) are destroyed during ejection.

## Revendications

1. Dispositif de serrage pour le serrage d'une pièce (4) sur un porte-pièce (2) au moyen d'un adhésif (10), ledit dispositif de serrage comportant une pluralité d'adaptateurs (16, 18 ; 42) guidés chacun dans une coulisse (20, 22) du porte-pièce (2) pour la fixation de la pièce (4) au porte-pièce (2), lesquels présentent chacun une surface adhésive (26) pour la réalisation d'une liaison adhésive avec la pièce (4),
**caractérisé en ce que**
l'adhésif (10) peut être réparti par un système de canaux interne des adaptateurs (16, 18, 42) mis en place dans les coulisses (20, 22).

2. Dispositif de serrage selon la revendication 1, où les coulisses (20, 22) sont réalisées comme ouvertures de passage, en particulier comme alésages débouchant qui s'étendent au travers du porte-pièce (2), depuis une surface de serrage (6) jusqu'à une surface de support (24) arrière.

3. Dispositif de serrage selon la revendication 2, où les adaptateurs (16, 18 ; 42) sont des corps cylindriques présentant chacun un diamètre extérieur (dA) inférieur à un diamètre intérieur (dI) des coulisses (20, 22).

4. Dispositif de serrage selon la revendication 3, où les adaptateurs (42) sont réalisés en forme de godets.

5. Dispositif de serrage selon l'une des revendications précédentes, où au moins un élément d'éjection (40 ; 48) déplaçable est prévu pour le détachement des liaisons adhésives, lequel peut être serré contre une surface frontale arrière (28 ; 52) des adaptateurs (16, 18 ; 42).

6. Dispositif de serrage selon la revendication 5, où l'élément d'éjection (48) comporte un élément de chauffage (46) pour amollir l'adhésif (10) durci.

7. Dispositif de serrage selon l'une des revendications précédentes, où les adaptateurs (16, 18 ; 42) sont réalisés comme éléments jetables.

8. Procédé de serrage d'une pièce (4) sur un porte-pièce (2) au moyen d'un adhésif (10), recourant à un dispositif de serrage selon l'une des revendications 1 à 7, comprenant les étapes suivantes :
- positionnement de la pièce (4) par rapport au porte-pièce (2),
- ajustement d'un interstice de collage (12, 14) entre les adaptateurs (16, 18 ; 42) et la pièce (4), et
- durcissement de l'adhésif (10) pour la réalisation de liaisons adhésives entre les adaptateurs (16, 18 ; 42) et la pièce (4),
**caractérisé en ce que**
l'adhésif (10) peut être réparti par un système de canaux interne des adaptateurs (16, 18 ; 42) mis en place dans les coulisses (20, 22).

9. Procédé selon la revendication 8, où les coulisses (20, 22) sont remplies d'adhésif (10) avant la mise en place des adaptateurs (16, 18 ; 42) dans celles-ci.

10. Procédé selon la revendication 8, où l'adhésif (10) est appliqué frontalement sur les adaptateurs (16, 18 ; 42) avant la mise en place des adaptateurs (16, 18 ; 42) dans les alésages (20, 22).

11. Procédé selon l'une des revendications 8 à 10, où l'éjection de chaque adaptateur (16, 18 ; 42) est effectuée au moyen d'un élément d'éjection (40 ; 48) en prise sur une surface frontale arrière (28 ; 52) des adaptateurs (16, 18 ; 42).

12. Procédé selon la revendication 11, où, avant éjection, l'adhésif (10) est amolli au moyen d'un élément de chauffage (46) de l'élément d'éjection (48).

13. Procédé selon la revendication 11 ou 12, où les adaptateurs (16, 18 ; 42) sont détruits lors de l'éjection.
